# EUROPÄISCHE PATENTANMELDUNG

(11) **EP 0 598 278 A1**
(43) Veröffentlichungstag der Anmeldung: **25.05.1994**
(21) Anmeldenummer: 93117768.7
(22) Anmeldetag: 03.11.1993
(51) Int. Cl.: G12B 5/00, G02B 27/64

(54) **Inertialstabilisierungssystem**

(30) Priorität: 14.11.1992 DE 4238512
(71) Anmelder: Daimler-Benz Aerospace Aktiengesellschaft, D-81663 München (DE)
(72) Erfinder: Schneider, Heinrich, D-81739 München (DE)

(57) **Zusammenfassung**

Bei einem Inertialstabilisierungssystem für eine auf einem dynamisch hoch- und niedrigfrequent bewegten Träger (122) abgestützte Plattform (128), bei dem zwischen Träger und Plattform eine über eine Dämpfungseinrichtung (110) hochfrequent schwingungsisoliert am Träger montierte Basis (104) angeordnet ist, auf der die Plattform mittels zumindest eines Regelkreises einstellbeweglich gelagert ist welcher einen die Istbewegungen der Plattform aufnehmenden Inertialsensor (112), einen aus der Ist-Sollwertdifferenz der Plattform ein Stellsignal bildenden Regler (114) und eine vom Stellsignal gesteuerte, zwischen Basis und Plattform wirksame Stelleinrichtung (108. 132) aufweist, ist erfindungsgemäß im Regelkreis ein zusätzlicher, die niederfrequenten Bewegungsanteile der Dämpfungseinrichtung zwischen Träger und Basis aufnehmender Sensor (116 A) und ein diesem nachgeschaltetes, zur Bildung der Regelabweichung die Ist-Sollwertdifferenz nach Maßgabe des Sensor-Ausgangssignals reduzierendes Regelkreisglied vorgesehen, wodurch vor allem bei sprunghaften Sollwertänderungen das Störungs- und Führungsverhalten des Regelkreises erheblich verbessert wird.

## Beschreibung

Die Erfindung bezieht sich auf ein Inertialstabilisierungssystem nach dem Oberbegriff des Patentanspruchs 1.

Inertialgeregelte Stabilisierungssysteme, wie sie etwa für Visier- oder Bildaufnahmegeräte an Bord eines Hubschraubers oder einer anderen bewegten Tragstruktur Verwendung finden, enthalten zur Azimutstabilisierung zumeist ein aus mehreren Regelschleifen bestehendes Koppelungsnetzwerk, durch das ein relativ langsamer Azimutantrieb für die Grobeinstellung des Visiergerätes einem lagegeregelten Feinantrieb für die zu stabilisierende Plattform, etwa einen trägheitsarmen, in der Visierlinie angeordneten Umlenkspiegel, nachgeführt wird. Derartige Stabilisierungssysteme, wie sie aus der DE 31 00 951 A1, der DE-OS 20 33 871, der EP 0 256 592 A2 oder der EP 0 068 932 B1 bekannt sind, erfordern bei ausreichender Regelgüte eine sehr hohe Regelbandbreite und einen großen Regelaufwand, um sowohl die nieder- als auch die hochfrequenten Störbewegungen der Tragstruktur, d.h. bei einem Hubschrauber sowohl die relativ langsamen Flugbahnänderungen als auch die aus der Rotordrehung resultierenden, höherfrequenten Vibrationen, auszuregeln. Dabei können die hoch- und die niederfrequenten Bewegungsanteile einer Trägheitsplattform mit Hilfe von Beschleunigungssensoren getrennt voneinander aufgenommen werden (DE 34 33 189 A1).

Bei bekannten Stabilisierungssystemen der eingangs genannten Art hingegen sind aus Gründen einer baulichen Vereinfachung des Regelungsnetzwerkes zwischen der Tragstruktur und der Basis des Stabilisierungssystems Dämpfungselemente mit einer relativ weichen Dämpfungscharakteristik angeordnet, die die höherfrequenten Bewegungsanteile der Tragstruktur absorbieren, so daß nur noch die niederfrequenten Störbewegungen von den Regelschleifen und den zugehörigen, zwischen Basis und Plattform wirkenden Stellantrieben ausgeregelt werden müssen. Die Schwierigkeit bei solchen gedämpften Systemen ist, daß die Dämpfer eine geringe Frequenzselektivität besitzen und die aus den Regelbewegungen der Stellantriebe resultierenden, auf die Dämpfer rückwirkenden Reaktionskräfte eine zusätzliche Dämpferdeformation und dadurch eine ungewollte, die Reglerstellgröße verzerrende Regelabweichung induzieren, so daß sich Positionierfehler, ein Nachschwingen der Plattform bei einer Sprungfunktion und Phasenverschiebungen im Regelverhalten ergeben, die das System in die Resonanzfrequenz treiben können. Dieser Effekt läßt sich zwar durch eine Reduzierung der Regelverstärkung abschwächen, jedoch geht dies auf Kosten einer hinreichend großen Regelgeschwindigkeit und damit Regelgüte.

Aufgabe der Erfindung ist es, das Inertialstabilisierungssystem der eingangs genannten Art so auszubilden, daß die erwähnten, dämpferinduzierten Regelfehler auf baulich einfache Weise reduziert und die Regelgüte und vor allem auch die Regelgeschwindigkeit erheblich gesteigert werden.

Diese Aufgabe wird erfindungsgemäß durch das im Patentanspruch 1 gekennzeichnete Inertialstabilisierungssystem gelöst.

Erfindungsgemäß wird zum Abbau der dämpferinduzierten Regelfehler nicht etwa die Regelverstärkung und damit die Regelgeschwindigkeit generell verringert, wodurch das System selbst bei kleineren Regelabweichungen träger arbeiten würde, sondern die Regelsteilheit des Regelungsnetzwerks wird in Abhängigkeit von der Frequenz und Amplitude der sensierten Dämpferbewegungen derart modifiziert, daß nur bei Überschreiten der Grenzfrequenz des Stabilisierungssystems in das Regelverhalten nach Maßgabe der durch den Regelvorgang selbst erzeugten Dämpferdeformationen eingegriffen wird, hingegen die trägerseitig verursachten, hochfrequenten Dämpferbewegungen ohne Einfluß auf den Regelvorgang sind, so daß die Regelverstärkung bis zu einer durch die Dämpferfunktion vorgegebenen Obergrenze voll erhalten bleibt. Hierdurch werden die systembedingten, auf der geringen Frequenzselektivität der Dämpfer beruhenden Störeffekte sehr einfach und wirksam reduziert und eine hohe Regelgenauigkeit und -geschwindigkeit garantiert.

In vorteilhafter Ausgestaltung der Erfindung werden die Dämpferbewegungen gemäß Anspruch 2 im Hinblick auf eine verschleißarme Sensor-Bauweise berührungsfrei abgetastet, und aus Gründen einer baulichen Vereinfachung besteht der Sensor gemäß Anspruch 3 zweckmäßigerweise aus einem die Dämpferbewegungen aufnehmenden Weggeber mit einem nachgeschalteten, die höherfrequenten Bewegungsanteile der Dämpfungseinrichtung auf elektronischem Wege ausblendenden Tiefpaßfilter.

Gemäß Anspruch 4 ist vorzugsweise eine mehrachsige Stabilisierung mit mehreren, die niederfrequenten Bewegungsanteile der Dämpfungseinrichtung jeweils in unterschiedlichen Stabilisierungsachsen erfassenden Sensoren vorgesehen. Wird schließlich gemäß Anspruch 5 zur Azimutstabilisierung ein aus mehreren, miteinander verkoppelten Regelkreisen bestehendes Netzwerk mit einem einem lagegeregelten Feinantrieb nachgeführten Grobantrieb verwendet, so ist sämtlichen Azimutregelkreisen zweckmäßigerweise nur ein einziger, die niederfrequenten Bewegungsanteile der Dämpfungseinrichtung bezüglich der Azimutachse aufnehmender Sensor zugeordnet.

Die Erfindung wird nunmehr anhand eines Ausführungsbeispiels in Verbindung mit den Zeichnungen näher erläutert. Es zeigen in stark schematisierter Darstellung:
- **Fig. 1**: den prinzipiellen Aufbau eines Stabilisierungssystems zur Kompensation einachsig translatorischer Störbewegungen; und
- **Fig. 2**: ein Stabilisierungssystem für ein Visionikgerät mit einer Azimut- und Elevations-Regelung.

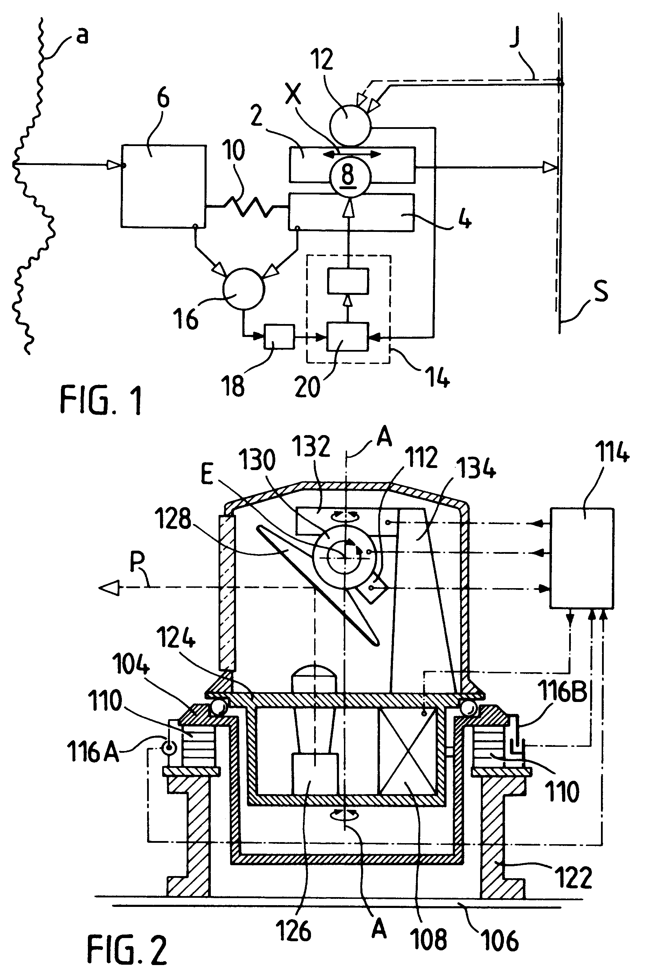

Das in Fig. 1 im prinzipiellen Aufbau gezeigte Stabilisierungssystem, dessen Stabilisierungswirkung der Einfachheit halber lediglich bezüglich einer einzigen, translatorischen Bewegungsrichtung erläutert wird, enthält eine Visierplattform 2, die unter Zwischenschaltung einer Visierbasis 4 auf einem Träger 6. etwa einem Hubschrauber, abgestützt ist und unbeeinflußt von den hoch- und niederfrequenten Störbewegungen a des Trägers 6. also den der Rotor-Grundfrequenz und den Höherharmonischen entsprechenden Hubschrauber Vibrationen von z.B. 28 ... 56 Hz sowie den wesentlich langsamer, nämlich mit einer Frequenz von etwa 5 Hz ablaufenden Flugbahnänderungen, möglichst genau in einer vorgegebenen, in bestimmten Grenzen beliebig veränderlichen Sollage S gehalten werden soll.

Zu diesem Zweck ist die Plattform 2 über einen Antrieb 8 in Stabilisierungsrichtung X einstellbar auf der Basis 4 angeordnet und diese ist am Träger 6 über eine in Stabilisierungsrichtung X nachgiebige, mechanische Dämpfungseinrichtung 10 abgestützt, deren Federcharakteristik so weich gewählt ist, daß die trägerseitig einwirkenden Störbewegungen a hoher Frequenz von der Dämpfungseinrichtung 10 absorbiert werden, so daß nur die niedrigfrequenten Bewegungsanteile des Trägers 6 an die Basis 4 und die Plattform 2 übertragen werden und durch den zugeordneten, den Antrieb 8 enthaltenden Regelkreis ausgeregelt werden müssen, dessen Meßglied aus einem Inertialsensor 12 in Form eines Gyroskops besteht, das die Differenz zwischen der Sollage S und der Istlage I der Plattform 2 einem Regler 14 eingibt, der aus der Regelabweichung ein den Antrieb 8 steuerndes Stellsignal bildet, durch welches die Plattform 2 dem Sollwert S nachgeführt wird.

Bei dem geschilderten Stabilisierungssystem wird die Ist-Soll-Differenz jedoch nicht nur durch die trägerseitig einwirkenden Störbewegungen a, sondern auch systembedingt durch in der Regelstrecke selbst entstehende Reaktionskräfte beeinflußt. die beim Anlaufen des Antriebs 8 über die Basis 4 auf die Dämpfungseinrichtung 10 zurückwirken, mit der Folge, daß das Ausgangssignal des Inertialsensors 12 und folglich auch die Reglerstellgröße durch die resultierende Dämpferdeformation verzerrt wird und es bei höheren Regelgeschwindigkeiten zu Positionierfehlern und, vor allem bei sprunghaften Sollwertänderungen, zu einem unzulässigen Nachschwingen der Plattform 2 und zu Phasenverschiebungen im Regelverhalten kommt, die das System in die Resonanzfrequenz treiben können.

Um dies zu verhindern, enthält das Stabilisierungssystem gemäß Fig. 1 einen die Dämprerbewegungen zwischen Basis 4 und Träger 6 berührungsfrei messenden Weggeber 16 mit einem nachgeordneten Tiefpaßfilter 18, das die höherfrequenten Bewegungsanteile der Dämpfungseinrichtung 10 ausblendet, sowie ein dem Tiefpaßfilter 18 und dem Inertialsensor 12 nachgeschaltetes Regelkreisglied 20, durch welches die niedrigfrequenten Dämpferbewegungen derart in den Regelkreis eingeführt werden, daß das Differenzsignal des Inertialsensors 12 nach Maßgabe des Ausgangssignals des Sensors 16, 18 reduziert wird. Auf diese Weise wird die Reglerstellgröße bei Annäherung an die Grenzfrequenz des Stabilisierungssystems in Übereinstimmung mit der Dämpferfunktion modifiziert, so daß die systembedingten Störeffekte wirksam abgebaut und die Regelgüte und vor allem -geschwindigkeit erheblich verbessert werden.

Fig. 2 zeigt ein Stabilisierungssystem für ein an der Tragstruktur 106 eines Hubschraubers montiertes Visionikgerät und unterscheidet sich von dem Ausführungsbeispiel gem. Fig. 1 in erster Linie durch eine rotative Stabilisierungswirkung sowohl um die Elevations- als auch um die Azimutachse sowie eine Zweikreis-Regelung der Azimutstabilisierung.

Im einzelnen enthält das Stabilisierungssystem einen z.B. am Hubschrauberdach befestigten Lagerbock 122, auf dem eine Basis 104 über in Azimut- und Elevationsrichtung nachgiebige und höherfrequent schwingungsabsorbierende Dämpfungselemente 110 abgestützt ist, deren Dämpferbewegungen jeweils durch Azimut- bzw. Elevationsweggeber 116 A. 116 B gemessen werden. An der Basis 104 ist ein Gerätetisch 124 um die Azimutachse A drehbar und mittels eines Grobantriebs 108 über einen Winkelbereich von z.B. ± 120° einstellbar gelagert. Der Gerätetisch 124 trägt ein optisches Aufnahmegerät 126. etwa eine CCD-Kamera und einen in der optischen Achse P des Aufnahmegeräts 126 angeordneten, die lagegeregelte Plattform des Stabilisierungssystems bildenden Umlenkspiegel 128, der über einen in einem Winkelbereich von etwa ± 20° wirksamen Stellantrieb 130 um die Elivationsachse E drehpositionierbar sowie einen weiteren, in einem Winkelbereich von etwa ± 1° wirksamen Azimutantrieb 132 zur Feineinstellung an einer am Gerätetisch 124 befestigten Tragsäule 134 angeordnet ist. Bewegungsfest mit dem Umlenkspiegel 128 ist ein Zweiachs-Inertialsensor 112 in Form eines Wendekreisels gekoppelt, der die jeweiligen Lagedifferenzen des Umlenkspiegels 128 zu den vorgegebenen Elevations- und Azimut-Sollwerten mißt.

Die Lagedifferenzsignale des Inertialsensors 112 werden einem Reglernetzwerk 114 eingegeben, wo von dem Azimut-Differenzsignal - analog dem ersten Ausführungsbeispiel - in einer dem Regelkreisglied 20 entsprechenden Mischstufe das zuvor in einem Tiefpaßfilter von den höherfrequenten Bewegungsanteilen der Dämpfungselemente 110 befreite Ausgangssignal des Azimut-Weggebers 116 A derart subtrahiert wird, daß das Azimut-Differenzsignal erst bei Überschreiten der Reglergrenzfrequenz durch die sensierten Dämpferbewegungen reduziert und somit die maximale Reglergeschwindigkeit durch die Dämpferfunktion begrenzt wird. Aus der so gebildeten Regelabweichung werden in den durch den Regler 114 miteinander vernetzten, die Antriebe 108 bzw. 132 enthaltenden Regelkreisen Stellsignale erzeugt, durch die der langsamere Azimut-Grobantrieb 108 dem schnellen, lagebegrenzten und lagegeregelten Feinantrieb 132 des Umlenkspiegels 128 echtzeitmäßig nachgeführt wird.

In entsprechender Weise kann das Elevations-Differenzsignal des Inertialsensors 112 im Regler 114 nach Maßgabe der mit Hilfe des Weggebers 116 B und eines nachgeschalteten, elektronischen Tiefpaßfilters sensierten, niederfrequenten Elevations-Dämpferbewegungen reduziert und dadurch die Dämpferfunktion in die Steuerung des Elevationsantriebs 130 einbezogen werden. Im übrigen ist die Bau- und Funktionsweise des Stabilisierungssystems gemäß Fig. 2 die gleiche wie beim ersten Ausführungsbeispiel.

## Patentansprüche

1. Inertialstabilisierungssystem für eine auf einem dynamisch hoch- und niederfrequent bewegten Träger, insbesondere einem Hubschrauber, abgestützte Plattform, mit einer zwischen Träger und Plattform angeordneten, über eine Dämpfungseinrichtung hochfrequent schwingungsisoliert am Träger montierten Basis, auf der die Plattform mittels zumindest eines Regelkreises einstellbeweglich angeordnet ist, welcher einen die Ist-Bewegungen der Plattform aufnehmenden Inertialsensor, einen aus der von der Ist-Sollage-Differenz der Plattform abhängigen Regelabweichung ein Stellsignal bildenden Regler und eine vom Stellsignal gesteuerte, zwischen Basis und Plattform wirksame Stelleinrichtung aufweist,
**dadurch gekennzeichnet,** daß
der Regelkreis einen zusätzlichen, die niederfrequenten Bewegungsanteile der Dämpfungseinrichtung (10; 110) zwischen Träger (6; 106, 122) und Basis (4; 104) aufnehmenden und ein entsprechendes Ausgangssignal erzeugenden Sensor (16, 18; 116 A, 116 B) und ein diesem nachgeschaltetes, zur Bildung der Regelabweichung die Ist-Sollage-Differenz nach Maßgabe des Sensor-Ausgangssignals reduzierendes Regelkreisglied (20) enthält.

2. Inertialstabilisierungssystem nach Anspruch 1,
**dadurch gekennzeichnet,** daß
der Sensor (16, 18) berührungsfrei mit der Dämpfungseinrichtung (10) gekoppelt ist.

3. Inertialstabilisierungssystem nach Anspruch 1 oder 2,
**dadurch gekennzeichnet,** daß
der Sensor (16, 18) einen die Relativbewegungen zwischen Träger (6) und Basis (4) aufnehmenden Weggeber (16 und ein nachgeschaltetes, die höherfrequenten Bewegungsanteile der Dämpfungseinrichtung (10) ausblendendes Tiefpaßfilter (18) enthält.

4. Inertialstabilisierungssystem nach einem der vorhergehenden Ansprüche, mit mehreren, jeweils für unterschiedliche Stabilisierungsachsen vorgesehenen Regelkreisen,
**dadurch gekennzeichnet,** daß
je Regelkreis ein die niederfrequenten Bewegungsabteile der Dämpfungseinrichtung (110) um die entsprechende Stabilisierungsachse (A, E) messender Sensor (116 A, 116 B) vorgesehen ist.

5. Inertialstabilisierungssystem nach einem der vorhergehenden Ansprüche, bei dem zur Stabilisierung um die Azimutachse mehrere, miteinander vernetzte Regelkreise einschließlich eines zwischen der Basis und einem auf dieser drehbar gelagerten Gerätetisch wirksamen Azimutantriebs zur Grobeinstellung und eines zwischen Gerätetisch und Plattform wirksamen Stellantriebs zur Feinstabilisierung der Plattform vorgesehen sind,
**dadurch gekennzeichnet,** daß
sämtlichen Regelkreisen (108, 112, 114, 130, 132) ein gemeinsamer, die niederfrequenten azimutalen Bewegungsanteile der Dämpfungseinrichtung (110) aufnehmender Sensor (116 A) zugeordnet ist.
